# EUROPÄISCHE PATENTSCHRIFT

(11) **EP 0 625 403 B1**
(45) Veröffentlichungstag und Bekanntmachung des Hinweises auf die Patenterteilung: **19.11.1997**
(21) Anmeldenummer: 93810354.6
(22) Anmeldetag: 13.05.1993
(51) Int. Cl.: B23K 35/14, B23K 35/32

(54) **Verfahren zum Herstellen einer Aktivhartlotpaste**
Method of manufacturing an active brazing paste
Procédé pour la fabrication d'une pâte en alliage de brazure active

(43) Veröffentlichungstag der Anmeldung: 23.11.1994
(73) Patentinhaber: ENDRESS U. HAUSER GMBH U. CO., D-79689 Maulburg (DE)
(72) Erfinder: Breme, Jürgen, Prof. Dr., D-66265 Heusweiler (DE); Müller, Heinz, Dipl.-Ing., D-66589 Merchweiler (DE); Hegner, Frank, Dr., D-79540 Lörrach (DE); Schmidt, Elke Maria, Dipl.-Ing., D-79650 Schopfheim (DE)
(74) Vertreter: Morstadt, Volker, Dipl.-Ing. c/o Endress + Hauser Flowtec AG

(56) Entgegenhaltungen:
- EP-A- 0 456 481
- DE-B- 1 217 184
- FR-A- 1 410 887
- GB-A- 664 507
- US-A- 5 152 449

## Beschreibung

Die Erfindung betrifft das Herstellen einer Aktivhartlotpaste aus einer gewählten pulverisierten Aktivhartlot-Legierung durch Vermischen mit einem organischen Material als Vehikel.

Aus der FR-A 14 10 887 ist es bekannt, ein stöchiometrisch hydriertes, durch Hydrieren von entgastem Titanschwamm in Wasserstoff bei 450 °C hergestelltes Ti-Pulver, also TiH, mit Methylalkohol zu mischen und zur Verbindung von Kupfer und rostfreiem Stahl zu benutzen. TiH ist kein Aktivhartlot, denn Aktivhartlote sind immer Legierungen von mindestens zwei Metallen, s.u.

Für die Herstellung von Legierungspulvern durch Mahlen von Stücken der entsprechenden, bereits hergestellten Legierung, die ein Aktivmetall, wie z.B. Titan, enthält, ist in der Zeitschrift "Titanium Science and Technology - Proceedings of the Fifth International Conference on Titanium", Vol. 1, München, Sept. 1984, Seiten 443 bis 450, ein als Hydride Dehydriding Process - abgekürzt HDH - bezeichnetes Verfahren beschrieben, bei dem grobe Stücke einer gewählten Aktivhartlot-Legierung, insb. TiAl6V4, vorhydriert und dann pulverisiert werden. Daran anschließend wird das Pulver wieder sorgfältig dehydriert.

Die Hydrierung vor dem Zermahlen erhöht die Spröde der groben Stücke und verbessert daher deren Zermahlbarkeit. Dabei lagert sich der Wasserstoff an den Korngrenzen der polykristallinen Stücke bis zur Absättigung der Stücke mit Wasserstoff an.

Marktgängig sind ferner Mühlen für die Pulverisierung, sogenannte Kolloidmühlen, bei denen während des Mahlens ein Schutzgas, insb. Wasserstoff, dem Mahlgut zugeführt werden kann. Auf diese Weise können z.B. nach der DE-A 12 17 184 hydrierte Pulver elementarer, als Getter von Elektronenröhren dienender Metalle hergestellt werden.

Wird ein nach dem obigen HDH-Verfahren ermahlenes und dehydriertes Aktivhartlotpulver für die Herstellung einer Aktivhartlotpaste verwendet, so muß es unter normalen Atmosphären- und Temperaturbedingungen mit einem organischen Material als Vehikel offen misch- und verarbeitbar sein. Dehydriertes Aktivhartlotpulver ist aber anfällig für die Anlagerung von Bestandteilen der Luft, also insb. von Sauerstoff, Wasserdampf, Stickstoff und/oder Kohlendioxid, aber auch für die Anlagerung von aus dem organischen Vehikel stammenden C-H-Verbindungen.

Bei einer Variante der Herstellung von elektrisch leitenden Durchführungen von Isolierstoffteilen, insb. keramischen Drucksensoren, wird ein metallischer Anschlußleiter in eine Bohrung des Isolierstoffteils gesteckt und an einer Außenseite mit einem Wulst aus einer Aktivhartlotpaste umlegt, die anschließend bei hoher Temperatur in Vakuum mit dem Isolierstoffteil und dem Anschlußleiter hartverlötet wird, vgl. die EP-A 516 579.

Es hat sich jedoch gezeigt, daß eine aus dehydriertem Aktivhartlotpulver hergestellte Aktivhartlotpaste wegen der erwähnten Anlagerungen zum Hart-Einlöten der genannten Anschlußleiter ungeeignet ist.

Ziel der Erfindung ist es daher, ein Verfahren für die Herstellung einer Aktivhartlotpaste anzugeben, die diesen Nachteil nicht hat.

Zur Erreichung dieses Ziels besteht die Erfindung in einem Verfahren zum Herstellen einer Aktivhartlotpaste, die ein Aktivhartlotpulver und ein organisches Material als Vehikel enthält,
- bei welchem Verfahren grobe Stücke einer gewählten Aktivhartlot-Legierung vorhydriert werden,
- diese vorhydrierten Stücke in einer Mühle unter Zusatz von Wasserstoff zu einem hydrierten Aktivhartlotpulver zermahlen werden und
- das hydrierte Aktivhartlotpulver mit dem flüssigen Vehikel offen unter normalen Atmosphären- und Temperaturbedingungen zu der Aktivhartlotpaste verarbeitet wird.

Ein besonderer Vorteil der nach der Erfindung hergestellten Aktivhartlotpaste besteht überraschenderweise darin, daß trotz der Verwendung eines nicht dehydrierten, also eines hydrierten, Aktivhartlotpulvers das Hartlöten der oben erwähnten Durchführungen problemlos möglich ist.

An sich müßte man nämlich erwarten, daß der angelagerte und bei der Löttemperatur von ca. 1000 °C sich abspaltende sowie in die mit Hartlot durch Kapillarwirkung zu füllende Fuge zwischen Isolierstoffteil und Anschlußleiter eindringende Wasserstoff das Einfließen des Aktivhartlots in die Fuge verhindern würde.

Ein weiterer Vorteil der Erfindung liegt darin, daß aufgrund der Verwendung des hydrierten Aktivhartlotpulvers dessen Herstellung, die Herstellung der Aktivhartlotpaste und das Hartlöten jeweils zeitlich weit auseinander liegen können und nicht unmittelbar nacheinander zu erfolgen brauchen. Sowohl das Aktivhartlotpulver als auch die Aktivhartlotpaste sind nämlich mindestens ausreichend lagerfähig.

Nach dem Zermahlen bleibt die Oberfläche der einzelnen Körner des Aktivhartlotpulvers übrigens mit Wasserstoff so vollständig abgesättigt, daß anschließendes Belüften und Lagern unter normaler Atmosphäre und Temperatur nicht zu unerwünschter Oxidation, Nitrierung etc. führt.

Es sei noch betont, daß als Ausgangsmaterial für das Hydrieren und das anschließende Zermahlen bereits eine erschmolzene Aktivhartlot-Legierung zu wählen ist.

Als Aktivhartlot-Legierung für die Aktivhartlotpaste nach der Erfindung und für das Hartlöten der oben erwähnten Durchführungen eignen sich besonders die in der EP-A 490 807 beschriebenen ternären ZrNiTi-Aktivhartlote.

## Patentansprüche

1. Verfahren zum Herstellen einer Aktivhartlotpaste, die ein Aktivhartlotpulver und ein organisches Material als Vehikel enthält,
- bei welchem Verfahren grobe Stücke einer gewählten Aktivhartlot-Legierung vorhydriert werden,
- diese vorhydrierten Stücke in einer Mühle unter Zusatz von Wasserstoff zu einem hydrierten Aktivhartlotpulver zermahlen werden und
- das hydrierte Aktivhartlotpulver mit dem flüssigen Vehikel offen unter normalen Atmosphären- und Temperaturbedingungen zu der Aktivhartlotpaste verarbeitet wird.

## Claims

1. A method of producing an active brazing paste containing an active brazing powder and an organic material acting as a vehicle, said method comprising the steps of
- prehydrogenating coarse pieces of a selected active brazing alloy,
- grinding said prehydrogenated pieces in a mill with the addition of hydrogen to obtain a hydrogenated active brazing powder, and
- processing the hydrogenated active brazing powder with the liquid vehicle openly, under normal atmospheric and temperature conditions, to form the active brazing paste.

## Revendications

1. Procédé pour la fabrication d'une pâte d'apport active de brasage fort comprenant une poudre d'apport active de brasage fort et une substance organique servant de véhicule,
- dans lequel des pièces grossières d'un alliage d'apport actif de brasage fort sont pré-hydratées,
- ces pièces pré-hydratées sont broyées dans un broyeur en ajoutant de l'hydrogène pour produire une poudre d'apport active de brasage fort et
- la poudre d'apport active de brasage fort est transformée en une pâte d'apport active de brasage fort avec le véhicule liquide, de façon ouverte et dans des conditions atmosphériques et de température normales.
